# EUROPÄISCHE PATENTANMELDUNG

(11) **EP 2 653 668 A1**
(43) Veröffentlichungstag der Anmeldung: **23.10.2013**
(21) Anmeldenummer: 12164480.1
(22) Anmeldetag: 17.04.2012
(51) Int. Cl.: F01K 3/18, F22B 1/02, F03D 9/02

(54) **Verfahren zum Laden und Entladen eines Wärmespeichers und Anlage zur Speicherung und Abgabe von thermischer Energie, geeignet für dieses Verfahren**

(71) Anmelder: Siemens Aktiengesellschaft, 80333 München (DE)
(72) Erfinder: Reznik, Daniel, 13503 Berlin (DE); Stiesdal, Henrik, 5000 Odense C (DK)

(57) **Zusammenfassung**

Gegenstand der Erfndung ist ein Verfahren zum Laden und Entladen eines Wärmespeichers (12). Weiterhin ist Gegenstand der Erfindung eine Anlage, mit der dieses Verfahren durchgeführt werden kann. Mittels des Wärmespeichers (12) ist es möglich, beispielsweise Überkapazitäten von Windkraftwerken (11) über einen Verdichter (22) in einen Ladekreislauf (13) als Wärme im Speicher (12) umzuwandeln. Im Bedarfsfall kann über eine Turbine (25) und einen Generator (G) Strom ins Netz eingespeichert werden, wobei der Wärmespeicher (12) entladen wird. Erfindungsgemäß ist vorgesehen, dass der Ladekreislauf (13) und der Entladekreislauf (14) mit einem Rankine-Prozess betrieben wird, wobei beispielsweise Flusswasser (17) als Reservoir für Wärmetauscher (16,19) zur Verfügung steht, um im Ladekreislauf eine Verdampfung und im Entladekreislauf eine Kondensation des Arbeitsmediums zu bewirken.

## Beschreibung

Die Erfindung betrifft ein Verfahren zum Laden und Entladen eines Wärmespeichers, bei dem folgende Schritte bevorzugt wechselseitig durchlaufen werden. Während eines Ladezyklus wird der Wärmespeicher durch ein Arbeitsfluid aufgewärmt, wobei vor dem Durchlaufen des Wärmespeichers durch eine als Arbeitsmaschine geschaltete erste thermische Fluidenergie-Maschine eine Druckerhöhung im Arbeitsfluid erzeugt wird und nach dem Durchlaufen des Wärmespeichers das Arbeitsfluid entspannt wird. Während eines Entladezyklus wird der Wärmespeicher durch dasselbe oder ein anderes Arbeitsfluid abgekühlt, wobei vor dem Durchlaufen des Wärmespeichers eine Druckerhöhung im Arbeitsfluid erzeugt wird und nach dem Durchlaufen des Wärmespeichers das Arbeitsfluid über eine als Kraftmaschine geschaltete zweite thermische Fluidenergie-Maschine oder die als Kraftmaschine geschaltete erste thermische Fluidenergie-Maschine entspannt wird.

Außerdem betrifft die Erfindung eine Anlage zur Speicherung und Abgabe von thermischer Energie mit einem Wärmespeicher, wobei der Wärmespeicher die gespeicherte Wärme an einen Ladekreislauf für ein Arbeitsfluid und einen Entladekreislauf für ein anderes oder dasselbe Arbeitsfluid abgeben kann. In dem Ladekreislauf sind folgende Einheiten in der angegebenen Reihenfolge durch Leitungen miteinander verbunden: Eine als Arbeitsmaschine geschaltete erste thermische Fluidenergie-Maschine, der Wärmespeicher, eine Einrichtung zur Entspannung des Arbeitsfluides, insbesondere eine erste Drossel, und ein erster Wärmetauscher. In dem Entladekreislauf sind folgende Einheiten in der angegebenen Reihenfolge durch Leitungen miteinander verbunden: Der Wärmespeicher, eine als Kraftmaschine geschaltete zweite thermische Fluidenergie-Maschine oder die als Kraftmaschine geschaltete erste Fluidenergie-Maschine, der erste Wärmetauscher oder ein zweiter Wärmetauscher und eine Pumpe. Das eingangs angegebene Verfahren bzw. die zur Durchführung des Verfahrens geeignete Anlage können beispielsweise verwendet werden, um Überkapazitäten aus dem elektrischen Netz mittels des Ladezyklus in thermische Energie zu wandeln und im Wärmespeicher abzuspeichern. Im Bedarfsfall wird dieser Prozess umgekehrt, so dass der Wärmespeicher in einem Entladezyklus entladen wird und mittels der thermischen Energie Strom gewonnen und in das Netz eingespeist werden kann.

Die Begriffe Kraftmaschine und Arbeitsmaschine werden im Rahmen dieser Anmeldung so verwendet, dass eine Arbeitsmaschine mechanische Arbeit aufnimmt, um ihren Zweck zu erfüllen. Eine thermische Fluidenergie-Maschine, die als Arbeitsmaschine verwendet wird, wird somit als Verdichter oder als Kompressor betrieben. Demgegenüber verrichtet eine Kraftmaschine Arbeit, wobei eine thermische Fluidenergie-Maschine zur Verrichtung der Arbeit die im Arbeitsgas zur Verfügung stehende thermische Energie umwandelt. In diesem Fall wird die thermische Fluidenergie-Maschine also als Motor betrieben.

Der Begriff "thermische Fluidenergie-Maschine" bildet einen Oberbegriff für Maschinen, die einem Arbeitsfluid thermische Energie entziehen oder diesem thermische Energie zuführen können. Unter thermischer Energie ist sowohl Wärmeenergie als auch Kälteenergie zu verstehen. Thermische Fluidenergie-Maschinen (im Folgenden auch kürzer als Fluidernergie-Maschinen bezeichnet) können beispielsweise als Kolbenmaschinen ausgeführt sein. Bevorzugt können auch hydrodynamische thermische Fluidenergie-Maschinen verwendet werden, deren Laufräder einen kontinuierlichen Fluss des Arbeitsgases erlauben. Vorzugsweise kommen axial wirkende Turbinen bzw. Verdichter zum Einsatz.

Das eingangs angegebene Prinzip ist beispielsweise gemäß der WO 2009/044139 A2 beschrieben. Hier kommen Kolbenmaschinen zum Einsatz, um das oben beschriebene Verfahren durchzuführen. Gemäß der US 5,436,508 ist es überdies bekannt, dass mittels der eingangs angegebenen Anlagen zur Speicherung thermischer Energie auch Überkapazitäten bei der Nutzung von Windenergie zur Herstellung elektrischen Stroms zwischengespeichert werden können, um diese im Bedarfsfall wieder abzurufen.

Die Aufgabe besteht darin, ein Verfahren zum Laden und Entladen eines Wärmespeichers bzw. eine Anlage zur Durchführung dieses Verfahrens anzugeben, mit dem bzw. mit der eine Speicherung und Rückgewinnung von Energie mit vergleichsweise hohem Wirkungsgrad erfolgen kann und dabei ein vergleichsweise geringer Aufwand an Komponenten entsteht.

Diese Aufgabe wird mit dem eingangs genannten Verfahren erfindungsgemäß dadurch gelöst, dass sowohl der Ladezyklus als auch der Entladezyklus als Rankine-Prozess ausgestaltet sind, bei dem das Arbeitsfluid während des Ladezyklus über einen ersten Wärmetauscher verdampft wird und während des Entladezyklus über den ersten oder einen zweiten Wärmetauscher kondensiert wird. Dabei stellen der erste Wärmetauscher und im Falle eines Vorhandenseins des zweiten Wärmetauschers auch dieser einen Temperaturausgleich mit der Umgebung her. Hierbei ist zu bemerken, dass je nach dem, ob getrennten Kreisläufe für die Wärmetauscher im Fall des Entladezyklus und des Ladezyklus vorgesehen sind oder beide Zyklen in ein und denselben Kreislauf stattfinden, ein oder zwei Wärmetauscher vorgesehen werden können. Selbiges gilt für die Fluidenergie-Maschinen. Der Vorteil der Verwendung zweier unterschiedlicher Fluidenergie-Maschinen hat den Vorteil, dass die eine auf den Ladezyklus und die andere auf den Entladezyklus optimiert werden kann. Hierdurch wird insbesondere das Ziel einer Steigerung des Gesamtwirkungsgrades erreicht. Wird eine einzige Fluidenergie-Maschine verwendet, müssen zwar Abstriche an den Wirkungsgrad gemacht werden, dafür ließe sich ein solches Verfahren mit einer kostengünstigeren Anlage durchführen, da Komponenten eingespart werden können.

Der Rankine-Prozess, der synonym auch als Clausius-Rankine-Prozess bezeichnet wird, kann insbesondere mit einer Dampf-Wärmepumpe bzw. mit einer Dampfturbine betrieben werden. Das Arbeitsmedium liegt dabei abwechselnd gasförmig und flüssig vor, wodurch vorteilhaft die spezifische Kreisprozessarbeit erhöht werden kann. Die Merkmale des im Folgenden kurz Rankine-Prozess genannten Prozesses werden im Folgenden noch näher erläutert.

Ein weiteres wesentliches Erfindungsmerkmal ist, dass für den Wärmetauscher ein Wärmeaustausch mit der Umgebung vorgesehen ist. Die Umgebung ist als Teil außerhalb des ablaufenden Prozesses zu verstehen. Der Wärmetauscher kann sowohl zur Aufnahme als auch zur Abgabe von thermischer Energie verwendet werden, wenn das ablaufende Verfahren so eingestellt wird, dass das Arbeitsfluid durch Aufnahme von Wärme aus der Umgebung verdampft werden kann, um anschließend über die erste Fluidenergie-Maschine verdichtet werden zu können, und im Fall des Entladezyklus durch Abgabe von Wärme an die Umgebung kondensiert werden kann, nachdem das Arbeitsfluid über die zweite Fluidenergie-Maschine Arbeit verrichtet hat. Dies kann z. B. durch die Wahl von Ammoniak oder Wasser als Arbeitsfluid erfolgen. Hierbei hat Ammoniak den Vorteil, dass beispielsweise bei einer Umgebungstemperatur von 15° C eine Überhitzung des Ammoniakdampfes gewährleistet werden kann. Die Wahl von Wasser als Arbeitsfluid hat den Vorteil, dass dessen Verwendung geringe Risiken für die Umwelt birgt.

Gemäß einer alternativen Lösung der Aufgabe kann bei dem eingangs angegebenen Verfahren auch vorgesehen werden, dass sowohl der Ladezyklus als auch der Entladezyklus als Rankine-Prozess ausgestaltet sind, bei dem das Arbeitsfluid während des Ladezyklus über einen dritten Wärmetauscher verdampft wird und während des Entladezyklus über einen zweiten Wärmetauscher kondensiert wird. Außerdem wird während des Ladezyklus der dritte Wärmetauscher durch ein anderes Arbeitsfluid mit geringerem Siedepunkt aufgewärmt, wobei vor dem Durchlaufen des Wärmetauschers durch eine als Arbeitsmaschine geschaltete dritte thermische Fluidenergie-Maschine eine Druckerhöhung in dem anderen Arbeitsfluid erzeugt wird und nach dem Durchlaufen des Wärmetauschers das andere Arbeitsfluid entspannt wird. Dabei ist erfindungsgemäß vorgesehen, dass der erste Wärmetauscher und der zweite Wärmetauscher einen Temperaturausgleich mit der Umgebung herstellen.

Mit der alternativen erfindungsgemäßen Lösung werden die oben bereits angeführten Vorteile erreicht. Es ist ebenfalls ein Austausch von Wärme mit der Umgebung möglich, wodurch Komponenten eingespart werden können. Zusätzlich kann der Vorteil erreicht werden, dass auf Ammoniak als Arbeitsfluid verzichtet werden kann und dennoch Wasser in den Kreislauf des dritten Wärmetauschers verwendet werden kann, ohne auf die Möglichkeit einer Überhitzung desselben verzichten zu müssen. Dies wird durch einen zweistufigen Ladezyklus erreicht, wobei der Ladezyklus am ersten, mit der Umgebung verbundenen Wärmetauscher beispielsweise vorteilhaft mit Kohlendioxid betrieben werden kann. Hierbei handelt es sich ebenfalls um eine Substanz, deren Verwendung hinsichtlich Umweltrisiken unbedenklich ist. Diese kann jedoch bei geringeren Temperaturen bereits überhitzt werden, wobei die durch Durchlaufen des Rankine-Prozesses im Kohlendioxid-Kreislauf eine Erwärmung des dritten Wärmetauschers erfolgt. Die durch den dritten Wärmetauscher zur Verfügung gestellte Energie liegt allerdings über den Temperaturniveau der Umgebung, so dass in dem Wasserkreislauf eine Überhitzung des Wasserdampfes bei technisch realisierbaren Druckverhältnissen erfolgen kann.

Eine besonders vorteilhafte Ausgestaltung der Erfindung wird erhalten, wenn als Wärmeträger aus der Umgebung Wasser verwendet wird. Dieses Wasser kann beispielsweise einem Fluss entnommen werden. Dies hat den Vorteil, dass Wasser, insbesondere fließendes Wasser geringeren Temperaturschwankungen unterworfen ist, als beispielsweise die Luft. Dadurch kann der Prozess Sommer wie Winter in einem kleineren Temperaturfenster durchgeführt werden. Außerdem lässt sich das Wasser auf einfache Weise an den ersten bzw. zweiten Wärmetauscher heranführen.

Die Aufgabe wird erfindungsgemäß mit der eingangs angegebenen Anlage im Übrigen dadurch gelöst, dass der erste Wärmetauscher und im Falle eines Vorhandenseins des zweiten Wärmetauscher auch dieser einen Wärmeaustausch mit der Umgebung gewährleisten. Dies setzt die Anlage vorteilhaft dazu instand, das oben angegebene Verfahren realisierbar zu machen. Die oben genannten Vorteile gelten daher entsprechend.

Selbiges gilt auch für die alternative Lösung der Aufgabe mit der eingangs angegebenen Anlage dadurch, dass in einem Zusatzkreislauf folgende Einheiten in der angegebenen Reihenfolge durch Leitungen miteinander verbunden sind: Eine als Arbeitsmaschine geschaltete dritte thermische Fluidenergie-Maschine, der dritte Wärmetauscher, eine Einrichtung zur Entspannung des Arbeitsfluides, insbesondere eine zweite Drossel und ein erster Wärmetauscher. Der erste Wärmetauscher und der zweite Wärmetauscher gewährleisten einen Wärmeaustausch mit der Umgebung der Anlage, wodurch die oben bereits erwähnten Vorteile erreichbar sind und insbesondere die Anlage instandgesetzt wird, um eines der vorstehend angegebenen Verfahren umzusetzen.

Gemäß einer vorteilhaften Ausgestaltung der Anlage kann vorgesehen werden, dass der Ladekreislauf und der Entladekreislauf zumindest abschnittsweise durch dieselben Leitungen verlaufen. Hiermit ist gemeint, dass die Leitungen sowohl im Entladezyklus als auch im Ladezyklus durchflossen werden. Dies kann deshalb vorgesehen werden, weil die Anlage immer entweder nur zur Speicherung von thermischer Energie oder zur Abgabe von thermischer Energie durch den Wärmespeicher (entspricht dem Ladezyklus und dem Entladezyklus) verwendet wird. Dies ist damit zu begründen, dass entweder der Zustand vorliegt, dass überflüssige Energie zum Laden des Wärmespeichers zur Verfügung steht oder der Bedarfsfall eintritt, indem die gespeicherte Energie aus dem Wärmespeicher beispielsweise in elektrische Energie umgesetzt werden soll. Ein Betrieb sowohl des Lade- als auch des Entladezyklus zur gleicher Zeit ist technisch also nicht sinnvoll. Durch Verwendung derselben Leitungen zumindest abschnittsweise wird vorteilhaft Material eingespart und der Komponentenaufwand weiter verringert. Insbesondere ist es möglich, den Lade- und Entladekreislauf komplett durch dasselbe Leitungssystem zu verwirklichen, wenn auch dieselbe thermische Fluidenergie-Maschine für das Laden und Entladen zum Einsatz kommen soll. Ansonsten können unterschiedliche Fluidenergie-Maschinen sowie notwendige Drosseln und Pumpen durch geeignete Bypassleitungen und Ventile in den Kreislauf integriert werden.

Besonders vorteilhaft ist es, wenn zumindest innerhalb des Wärmespeichers dieselben Leitungen für den Ladekreislauf und den Entladekreislauf vorgesehen sind. Dies verringert den Aufwand für die Erzeugung des Wärmespeichers beträchtlich, da in diesem durch die Leitungen eine möglichst große Oberfläche für einen Wärmeübergang zur Verfügung gestellt werden müssen. Außerdem kann das Volumen, welches bei der Verwendung von zwei Leitungssystemen im Wärmespeicher für eines der Leitungssysteme vorgesehen werden muss, im Falle der Verwendung von einem Leitungssystem mit dem Wärmespeichermedium ausgefüllt werden, wodurch vorteilhaft eine kompaktere Bauform möglich ist.

Vergleicht man die erfindungsgemäßen Anlagen bzw. Verfahren mit denjenigen gemäß der WO 2009/044139 A2, so wird überdies deutlich, dass der vollständige Kaltspeicher eingespart werden kann. Dies wird dadurch erreicht, dass das untere Temperaturniveau des jeweils ablaufenden Rankine-Prozesses auf Umgebungsniveau liegt, so dass als Kältespeicher die Umgebung genutzt werden kann. Dies hat zusätzlich den Vorteil, dass die durch die Umgebung zur Verfügung gestellte thermische Energie in den Prozess eingetragen werden kann. Außerdem fällt der Komponentenaufwand eines Kältespeichers fort. Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben. Es zeigen:
- Figur 1: ein Ausführungsbeispiel der erfindungsgemäßen Anlage als Blockschaltbild,
- Figur 2 und 3: zwei Ausführungsbeispiele des erfindungsgemäßen Verfahrens, welches mit einer Anlage gemäß Figur 1 durchgeführt werden kann,
- Figur 4: ein alternatives Ausführungsbeispiel der erfindungsgemäßen Anlage als Blockschaltbild und
- Figur 5 und 6: ein Ausführungsbeispiel des Verfahrens, welches mit der Anlage gemäß Figur 4 ausgeführt werden kann,

wobei die Verfahren in einem Diagramm mit der Temperatur T auf der Y-Achse und der Entropie S auf der X-Achse dargestellt sind.

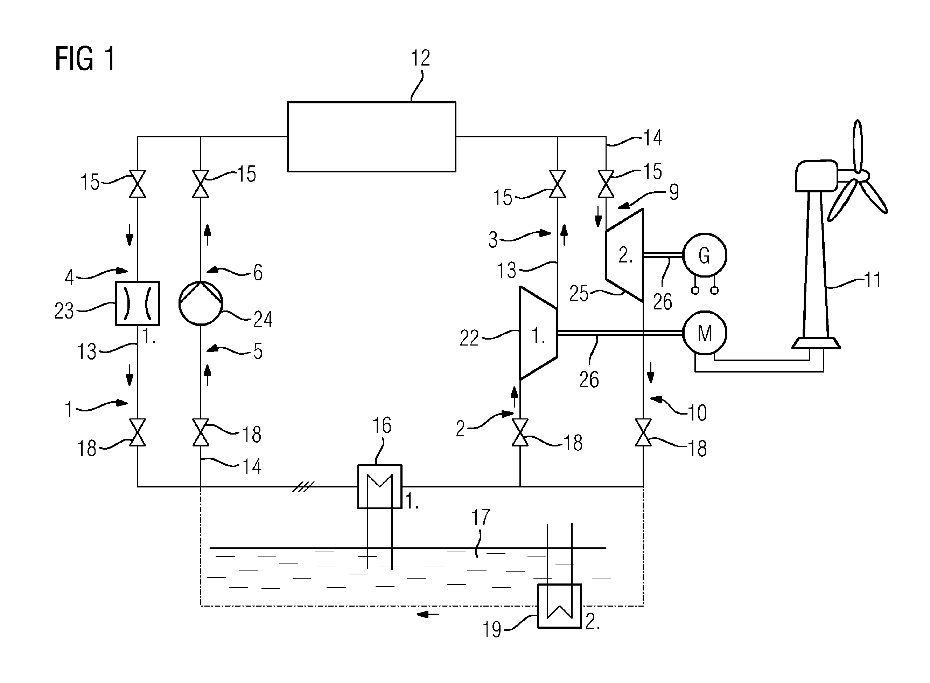

In Figur 1 ist eine Anlage zu erkennen, mit der überschüssige elektrische Energie eines Windkraftwerks 11 in thermische Energie umgewandelt werden kann, die in einem Wärmespeicher 12 gespeichert werden kann. Der Wärmespeicher kann in nicht näher dargestellter Weise beispielsweise aus einem Gusskörper aus Beton bestehen, in dem ein Kanalsystem vorgesehen ist, welches durch ein Arbeitsmedium durchflossen werden kann. Die elektrische Energie des Windkraftwerks 11 wird über einen Motor M in die Anlage eingespeist. Im Bedarfsfall kann der Wärmespeicher 12 entladen werden, wobei letztendlich über einen Generator G elektrische Energie erzeugt werden kann. Zur Wandlung von elektrischer Energie in thermische Energie und umgekehrt sind in der Anlage ein Ladekreislauf 13 und ein Entladekreislauf 14 realisiert. Diese bestehen aus schematisch dargestellten Leitungen, in denen ein Arbeitsfluid, wie beispielsweise Ammoniak, zirkulieren kann. Über Ventile 15 wird jeweils entweder der Ladekreislauf 13 oder der Entladekreislauf 14 aktiviert, indem eine Verbindung zum Wärmespeicher 12 hergestellt wird. Weiterhin ist in dem Lade- und Entladekreislauf ein erster Wärmetauscher 16 vorgesehen, der mit Flusswasser eines schematisch angedeuteten Flusses 17 gespeist werden kann. Auch für die Verbindung des ersten Wärmetauschers 16 sind Ventile 18 vorgesehen, damit dieser im Ladekreislauf 13 und im Entladekreislauf 14 zur Anwendung kommen kann. Statt der Ventile 18 kann auch, wie strichpunktiert dargestellt, ein zweiter Wärmetauscher 19 verwendet werden. Im Bereich der Wärmetauscher entstehen auf diesem Wege zwei getrennte Kreisläufe für Ladekreislauf 13 und Entladekreislauf 14, wie in Figur 1 angedeutet, was die Ventile 18 überflüssig macht.

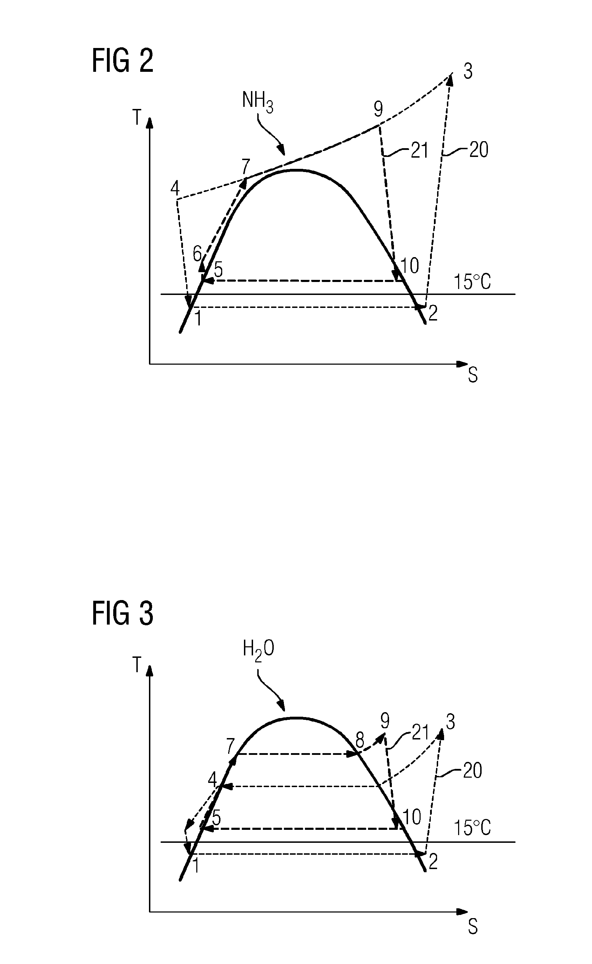

Die jeweiligen Flussrichtungen des Ladekreislaufes 13 und des Entladekreislaufes 14 sind mit Pfeilen angedeutet. Außerdem sind im Ladekreislauf 13 und Entladekreislauf 14 charakteristische Positionen durch Ziffern zwischen 1 bis 10 gekennzeichnet, wobei diese charakteristischen Positionen der ablaufenden Rankine-Prozesse auch in den Figuren 2 und 3 zu erkennen sind. Diese sollen den Durchlauf des jeweiligen Prozesses im Folgenden näher erläutern.

In Figur 2 sind ein Ladezyklus 20 und ein Entladezyklus 21 dargestellt, wie diese mit Ammoniak als Arbeitsmedium (R717) durchlaufen werden können. In Position 1 des Zyklus liegt das Arbeitsmedium mit einem Druck von 5 bar vor. Hier liegt die Siedetemperatur von Ammoniak bei 4°C. Damit kann die Wärme vom Flusswasser mit 15°C verwendet werden, um das Arbeitsmedium im ersten Wärmetauscher 16 zu verdampfen. Auf diesem Weg gelangt man zu Position 2. Wie Figur 1 zu entnehmen ist, wird das Arbeitsmedium mit Hilfe des Motors M durch eine erste Fluidenergie-Maschine 22, die als hydrodynamischer Verdichter geschaltet ist, auf einen Druck von mehr als 131 bar, beispielsweise 140 bar, gebracht. Hierbei heizt sich das Arbeitsmedium auf 320°C auf und erreicht Position 3. Diese Hitze kann anschließend in das Material des Wärmespeichers 12 eingetragen werden, wobei dieser als Wärmetauscher fungiert. In diesem Prozessschritt wird das Arbeitsmedium isobar auf eine Temperatur von weniger als 30°C abgekühlt, wodurch Position 4 des Zyklus erreicht wird. Durch eine erste Drossel 23 kann das Arbeitsmedium entspannt werden und erreicht auf diesem Wege wieder einen Druck von 5 bar. An dieser Stelle ist vorteilhaft das einfache Bauteil einer Drossel ausreichend. Eine Turbine oder dergleichen ist nicht erforderlich.

Der Entladezyklus 21 verläuft folgendermaßen. Der Kondensationsdruck kann bei 10 bar eingestellt werden, so dass die Siedetemperatur des Arbeitsmediums (ebenfalls Ammoniak) bei 25°C, also über den Temperaturniveau des Flusses bei 15°C liegt. In Position 5 des Entladezyklusses 21 liegt flüssiger Ammoniak vor und wird über eine Pumpe 24 auf einen superkritischen Druck gebracht. Durch den Wärmespeicher wird das Arbeitsmedium aufgewärmt und überkritisch auf die Position 9 gebracht. Dabei kann das im Wärmespeicher 12 vorliegende Temperaturniveau nicht ganz erreicht werden. Beispielsweise ist eine Erwärmung auf 220°C möglich. Aus dem Arbeitsmedium im überkritischen Zustand kann über eine zweite Fluidenergie-Maschine 25 in Form einer Turbine mechanische Energie gewonnen werden, die über den Generator G in elektrische Energie umgewandelt wird. Die mechanischen Verbindungen zwischen dem Generator G und der zweiten Fluidenergie-Maschine 25 sowie dem Motor M und der ersten Fluidenergie-Maschine 22 sind als Wellen 26 ausgeführt. Nach der Entspannung des Arbeitsmediums wird die Position 10 erreicht. Das entspannte Arbeitsmedium liegt noch gasförmig vor und wird bei 25°C kondensiert, wobei hierbei das Flusswasser aufgewärmt wird.

In Figur 3 ist ein Ladezyklus 20 und ein Entladezyklus 21 dargestellt, wie dieser mit einer Anlage gemäß Figur 1 unter Anwendung von Wasser durchlaufen werden kann. Hierbei soll wieder Flusswasser mit einer Temperatur von 15°C im ersten Wärmetauscher zum Einsatz kommen. Soll das Wasser bei einer Temperatur von 25°C kondensieren, ist ein Kondensationsdruck von 30 mbar vorauszusetzen. Eine Verdampfungstemperatur des Wassers von 5°C erfordert einen Druck von 10 mbar. Hieraus ergeben sich folgende Parameter für den Durchlauf des Ladezyklus. Von Position 1 zu Position 2 wird das Wasser bei 10 mbar verdampft. Position 3 des Ladezyklus wird erreicht, indem der Wasserdampf auf 1 bar verdichtet wird, wobei die Temperatur auf ungefähr 540°C steigt. Anschließend wird das Wasser während des Durchlaufens des Wärmespeichers 12 auf 99°C abgekühlt, wodurch der Wärmespeicher 12 aufgeheizt wird. Hierbei wird Position 4 erreicht. Der Wasserdampf wird über die Drossel 23 entspannt auf 10 mbar und erlangt hierbei wieder die Temperatur von 5°C.

Der Entladezyklus durchläuft die folgenden Positionen. In Position 5 besitzt das Wasser, welches nun vollständig bei 30 mbar kondensiert ist, eine Temperatur von 25°C. Mittels der Pumpe 24 wird das Wasser auf einen Arbeitsdruck gebracht und durch den Wärmespeicher 12 transportiert, nimmt dabei Wärme auf und erreicht Position 7. Hierbei fängt es an zu sieden und behält dabei die Temperatur in Position 7 bei, bis dieses vollständig verdampft ist (Position 8). Hierbei handelt es sich um eine unterkritische Verdampfung des Wassers. Das Temperaturniveau im Wärmespeicher 12 führt anschließend noch zu einer Überhitzung des Wasserdampfes unter Erreichung von Position 9 bei ungefähr 480°C. Anschließend wird die Position 10 erreicht, indem der Wasserdampf über die zweite Fluidenergie-Maschine 25 entspannt wird, hierbei erreicht die Wassertemperatur wieder eine Temperatur von 25°C bei einem Druck von 30 mbar. Im ersten Wärmetauscher 16 wird das Wasser anschließend wieder kondensiert, wodurch Position 5 des Entladezyklus erreicht wird.

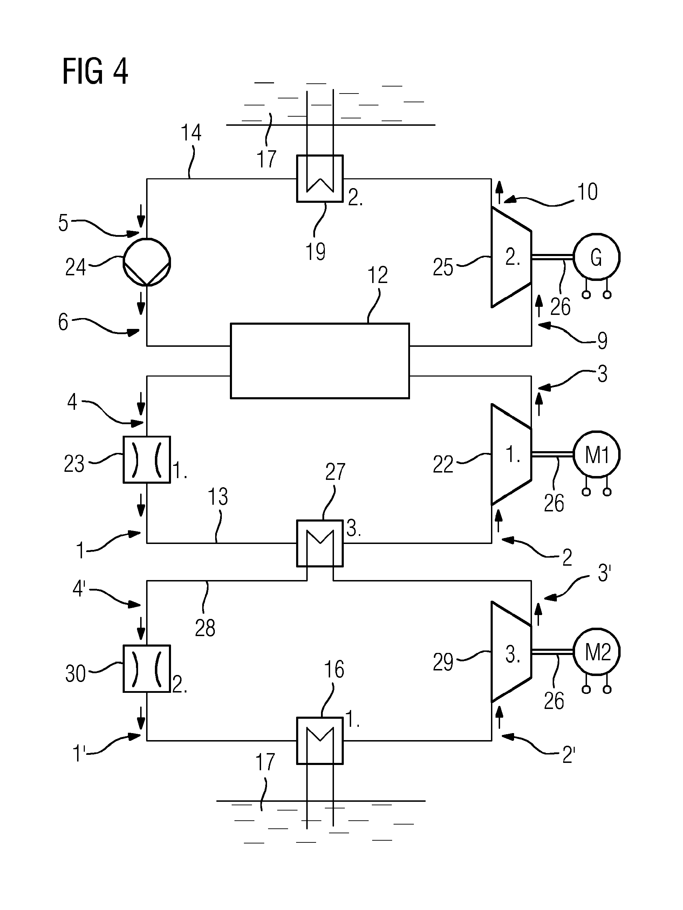

In Figur 4 ist ein anderes Ausführungsbeispiel der Anlage dargestellt. Diese unterscheidet sich von dem Ausführungsbeispiel gemäß Figur 1 hauptsächlich dadurch, dass der Ladezyklus zweistufig aufgeteilt wird. Die Erwärmung des Wärmespeichers 12 findet in dem Ladekreislauf 13 statt, welcher anders als in Figur 1 vollständig vom Entladekreislauf 14 getrennt ist. Der Ladekreislauf 13 mit der ersten Drossel 23, dem Wärmespeicher 12 und der ersten Fluidenergie-Maschine 22 und der Entladekreislauf mit der Pumpe 24, dem Wärmespeicher 12, der zweiten Fluidenergie-Maschine 25 und dem zweitem Wärmetauscher 19 ist analog zu Figur 1 aufgebaut. Allerdings weist der Wärmespeicher 12 zwei voneinander unabhängige Kanalsysteme jeweils für den Ladekreislauf und den Entladekreislauf auf, die in Figur 4 nicht genauer dargestellt sind.

Der wesentliche Unterschied zwischen Figur 4 und Figur 1 besteht jedoch darin, dass in dem Ladekreislauf 13 ein dritter Wärmetauscher 27 zum Einsatz kommt. Dieser wird nicht durch Flusswasser mit Umgebungstemperatur zwecks Wärmetausch versorgt, sondern ist an einen Zusatzkreislauf 28 angeschlossen. Der Zusatzkreislauf 28 weist folgende Funktion auf. Neben dem Motor M1, der die erste Fluidenergie-Maschine 22 versorgt, ist auch ein Motor M2 vorgesehen, der über eine Welle 26 eine dritte Fluidenergie-Maschine 29 antreibt. Diese ist in dem Zusatzkreislauf 29 vorgesehen und verdichtet das Arbeitsfluid, beispielsweise Kohlendioxid, welches sich dadurch erwärmt und die Wärme im dritten Wärmetauscher 27 an das Arbeitsfluid (beispielsweise Wasser) des Ladekreislaufes 13 abgibt. Anschließend wird das Arbeitsfluid des Zusatzkreislaufes 28 über eine zweite Drossel 30 entspannt und über den ersten Wärmetauscher 16, der seine Wärme an den Fluss 17 abgibt, kondensiert.

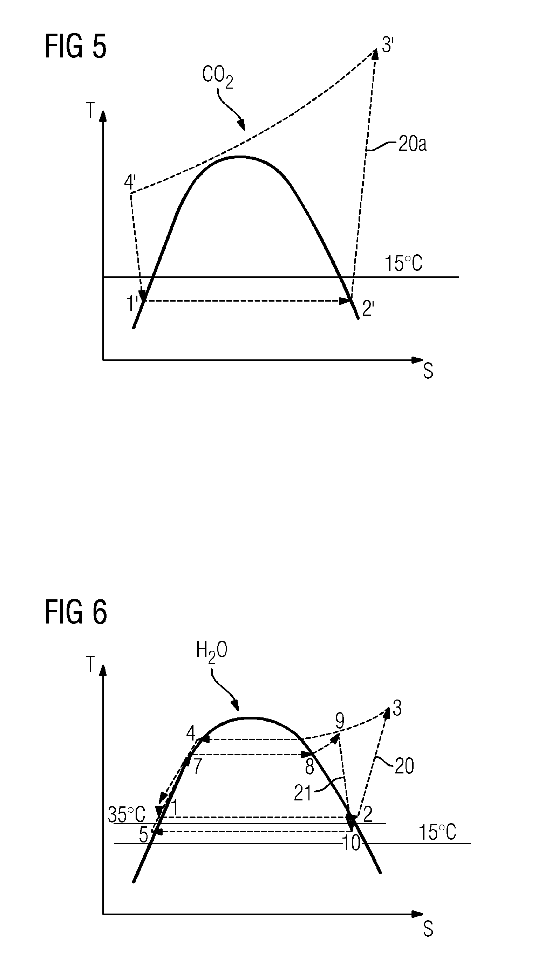

Die Positionen 1', 2', 3' und 4' sind in Figur 4 eingezeichnet und ergeben die charakteristischen Positionen des Rankine-Prozesses, welcher in Figur 5 dargestellt ist. Hierbei handelt es sich um einen hilfsweisen Ladezyklus 20a, der die erste Stufe des zweistufigen Ladeprozesses gemäß Figur 4 darstellt. Von Position 1' nach Position 2' wird das Kohlendioxid verdampft, bei einer Temperatur von 5°C und einem Druck von 40 bar. Hierbei kommt die notwendige Energie aus dem Fluss 17 und wird über den ersten Wärmetauscher 16 eingetragen. Über die dritte Fluidenergie-Maschine 29 wird das Kohlendioxid auf 97 bar verdichtet und erreicht eine Temperatur von 80°C (Position 3'). Diese Wärme kann über den dritten Wärmetauscher 27 an den Ladekreislauf 13 abgegeben werden, wobei hierfür ein Temperaturfenster zwischen 35 und 80°C zur Verfügung steht. Nach Abkühlung des Arbeitsmediums auf 35°C erreicht man Position 4', von wo durch Entspannung des Kohlendioxids über die zweite Drossel 30 ein Druck von 40 bar erreicht wird (Position 1').

Das Temperaturniveau von 35°C im dritten Wärmetauscher ermöglicht es, im Ladekreislauf 13 mit Wasser als Arbeitsmedium auf einem anderen Niveau zu operieren, als im Falle von Figur 3. Die Kondensation kann bei 30 mbar bei einer Temperatur von 25°C erfolgen (Position 10 zu Position 5). Sie liegt damit höher als im Falle der Figur 3. Andererseits kann der Entladezyklus analog zum Fall gemäß Figur 3 (Position 1 zu Position 2) durchgeführt werden. Das Temperaturniveau für den Entladezyklus wird also weiterhin durch den Fluss 17 mit 15°C vorgegeben.

Prinzipiell ist das erfindungsgemäße Verfahren nicht auf die in den Ausführungsbeispielen beschränkten Arbeitsfluide beschränkt. Es können beispielsweise auch Kohlenwasserstoffe wie Propan verwendet werden. Vergleicht man die Ausführungsbeispiele der Anlagen gemäß Figur 1 und 4, können deren Elemente auch untereinander kombiniert werden. Beispielsweise können der Ladekreislauf 13 und Entladekreislauf 14 gemäß Figur 4 auch gemäß Figur 1 mit teilweise denselben Leitungen und Ventilen 15 realisiert werden, womit in dem Wärmetauscher 12 nur ein Kanalsystem vorgesehen werden muss. Hierbei ist allerdings der zweite Wärmetauscher 19 in Figur 1 erforderlich, während der erste Wärmetauscher 16 gemäß Figur 1 durch den dritten Wärmetauscher 27 und den Zusatzkreislauf 28 mit allen Komponenten ersetzt werden müsste.

## Patentansprüche

1. Verfahren zum Laden und Entladen eines Wärmespeichers (12) bei dem
• während eines Ladezyklus der Wärmespeicher (12) durch ein Arbeitsfluid aufgewärmt wird, wobei vor dem Durchlaufen des Wärmespeichers (12) durch eine als Arbeitsmaschine geschaltete ersten thermischen Fluidenergie-Maschine (22) eine Druckerhöhung im Arbeitsfluid erzeugt wird und nach dem Durchlaufen des Wärmespeichers (12) das Arbeitsfluid entspannt wird und
• während eines Entladezyklus der Wärmespeicher (12) durch ein Arbeitsfluid abgekühlt wird, wobei vor dem Durchlaufen des Wärmespeichers (12) eine Druckerhöhung im Arbeitsfluid erzeugt wird und nach dem Durchlaufen des Wärmespeichers (12) das Arbeitsfluid über eine als Kraftmaschine gestaltete zweite thermische Fluidenergie-Maschine (25) oder die als Kraftmaschine geschaltete erste thermische Fluidenergie-Maschine (22) entspannt wird
**dadurch gekennzeichnet,**
**dass** sowohl der Ladezyklus als auch der Entladezyklus als Rankine-Prozess ausgestaltet sind, bei dem das Arbeitsfluid
• während des Ladezyklus über einen ersten Wärmetauscher (16) verdampft wird und
• während des Entladezyklus über den ersten oder einen
zweiten Wärmetauscher (19) kondensiert wird wobei der erste Wärmetauscher (16) und im Falle eines Vorhandenseins des zweiten Wärmetauschers auch der zweite Wärmetauscher (19) einen Temperaturausgleich mit der Umgebung herstellen.

2. Verfahren nach Anspruch 1,
**dadurch gekennzeichnet,**
**dass** das Arbeitsfluid Ammoniak oder Wasser ist.

3. Verfahren zum Laden und Entladen eines Wärmespeichers (12) bei dem
• während eines Ladezyklus der Wärmespeicher (12) durch ein Arbeitsfluid aufgewärmt wird, wobei vor dem Durchlaufen des Wärmespeichers (12) durch eine als Arbeitsmaschine geschaltete ersten thermischen Fluidenergie-Maschine (22) eine Druckerhöhung im Arbeitsfluid erzeugt wird und nach dem Durchlaufen des Wärmespeichers (12) das Arbeitsfluid entspannt wird und
• während eines Entladezyklus der Wärmespeicher (12) durch ein Arbeitsfluid abgekühlt wird, wobei vor dem Durchlaufen des Wärmespeichers (12) eine Druckerhöhung im Arbeitsfluid erzeugt wird und nach dem Durchlaufen des Wärmespeichers (12) das Arbeitsfluid über eine als Kraftmaschine gestaltete zweite thermische Fluidenergie-Maschine (25) oder die als Kraftmaschine geschaltete erste thermische Fluidenergie-Maschine (22) entspannt wird
**dadurch gekennzeichnet,**
**dass** sowohl der Ladezyklus als auch der Entladezyklus als Rankine-Prozess ausgestaltet sind, bei dem das Arbeitsfluid
• während des Ladezyklus über einen dritten Wärmetauscher (27) verdampft wird,
• während des Entladezyklus über einen zweiten Wärmetauscher (19) kondensiert wird und
• während des Ladezyklus der dritte Wärmetauscher (27) durch ein anderes Arbeitsfluid mit geringerem Siedepunkt aufgewärmt wird, wobei vor dem Durchlaufen des Wärmetauschers (27) durch eine als Arbeitsmaschine geschaltete dritte thermische Fluidenergie-Maschine (29) eine Druckerhöhung in dem anderen Arbeitsfluid erzeugt wird und nach dem Durchlaufen des Wärmetauschers (27) das andere Arbeitsfluid entspannt wird,
wobei der erste Wärmetauscher (16) und der zweite Wärmetauscher (19) einen Temperaturausgleich mit der Umgebung herstellen.

4. Verfahren nach Anspruch 3,
**dadurch gekennzeichnet,**
**dass** das Arbeitsfluid Wasser und das zweite Arbeitsfluid Kohledioxid ist.

5. Verfahren nach einem der vorangehenden Ansprüche, **dadurch gekennzeichnet,**
**dass** als Wärmeträger aus der Umgebung Wasser verwendet wird.

6. Anlage zur Speicherung und Abgabe von thermischer Energie mit einem Wärmespeicher (12), wobei der Wärmespeicher (12) die gespeicherte Wärme an einen Ladekreislauf (13) für ein Arbeitsfluid und einen Entladekreislauf (14) für ein Arbeitsfluid abgeben kann, wobei in dem Ladekreislauf (13) folgende Einheiten in der angegebenen Reihenfolge durch Leitungen miteinander verbunden sind:
• eine als Arbeitsmaschine geschaltete erste thermische Fluidenergie-Maschine (22),
• der Wärmespeicher (12),
• eine Einrichtung zur Entspannung des Arbeitsfluides, insbesondere eine erste Drossel (23) und
• ein erster Wärmetauscher (16)
und wobei in dem Entladekreislauf (14) folgende Einheiten in der angegebenen Reihenfolge durch Leitungen miteinander verbunden sind:
• der Wärmespeicher (12),
• eine als Kraftmaschine geschaltete zweite thermische Fluidenergie-Maschine (25) oder die als Kraftmaschine geschaltete erste Fluidenergie-Maschine (22),
• der erste Wärmetauscher (16) oder ein zweiter Wärmetauscher (19) und
• eine Pumpe (24)
**dadurch gekennzeichnet,**
**dass** der erste Wärmetauscher (16) und im Falle eines Vorhandenseins des zweiten Wärmetauschers der zweite Wärmetauscher (19) einen Wärmeaustausch mit der Umgebung der Anlage gewährleisten.

7. Anlage zur Speicherung und Abgabe von thermischer Energie mit einem Wärmespeicher (12), wobei der Wärmespeicher (12) die gespeicherte Wärme an einen Ladekreislauf (13) für ein Arbeitsfluid und einen Entladekreislauf (14) für ein Arbeitsfluid abgeben kann, wobei in dem Ladekreislauf (13) folgende Einheiten in der angegebenen Reihenfolge durch Leitungen miteinander verbunden sind:
• eine als Arbeitsmaschine geschaltete erste thermische Fluidenergie-Maschine (22),
• der Wärmespeicher (12),
• eine Einrichtung zur Entspannung des Arbeitsfluides, insbesondere eine erste Drossel (23) und
• ein dritter Wärmetauscher (27)
und wobei in dem Entladekreislauf (14) folgende Einheiten in der angegebenen Reihenfolge durch Leitungen miteinander verbunden sind:
• der Wärmespeicher (12),
• eine als Kraftmaschine geschaltete zweite thermische Fluidenergie-Maschine (25) oder die als Kraftmaschine geschaltete erste Fluidenergie-Maschine (22),
• ein zweiter Wärmetauscher (16) und
• eine Pumpe (24)
**dadurch gekennzeichnet,**
**dass** in einem Zusatzkreislauf (28) folgende Einheiten in der angegebenen Reihenfolge durch Leitungen miteinander verbunden sind:
• eine als Arbeitsmaschine geschaltete dritte thermische Fluidenergie-Maschine (29),
• der dritte Wärmetauscher (27),
• eine Einrichtung zur Entspannung des Arbeitsfluides, insbesondere eine zweite Drossel (30) und
• ein erster Wärmetauscher (16),
wobei der erste Wärmetauscher (16) und der zweite Wärmetauscher (19) einen Wärmeaustausch mit der Umgebung der Anlage gewährleisten.

8. Anlage nach Anspruch 6 oder 7,
**dadurch gekennzeichnet,**
**dass** der Laderkreislauf (13) und der Entladekreislauf (14) zumindest abschnittweise durch dieselben Leitungen verlaufen.

9. Anlage nach Anspruch 8,
**dadurch gekennzeichnet,**
**dass** zumindest innerhalb des Wärmespeichers (12) dieselben Leitungen für den Ladekreislauf (13) und den Entladekreislauf (14) vorgesehen sind.
